## Europäisches Patentamt
## European Patent Office
## Office européen des brevets

(19)

(11) Publication number: **0 006 989**
**B1**

(12)

# EUROPEAN PATENT SPECIFICATION

(45) Date of publication of patent specification: **15.06.83**

(51) Int. Cl.³: **G 01 N 27/56, H 01 B 1/00**

(21) Application number: **79101613.2**

(22) Date of filing: **26.05.79**

(54) Hot gas measuring device.

(30) Priority: **12.06.78 US 914703**

(43) Date of publication of application:
**23.01.80 Bulletin 80/2**

(45) Publication of the grant of the patent:
**15.06.83 Bulletin 83/24**

(84) Designated Contracting States:
**BE DE FR GB IT**

(56) References cited:
**DE - A - 2 401 134**
**DE - A - 2 703 390**
**DE - A - 2 738 755**
**US - A - 3 454 486**
**US - A - 4 021 326**
**US - A - 4 045 375**
**US - A - 4 101 404**

(73) Proprietor: **Corning Glass Works**
**Houghton Park**
**Corning, New York, 14831 (US)**

(72) Inventor: **Blumenthal, Robert Norman**
**17470 Bard Court**
**Brookfield Wisconsin (US)**
Inventor: **Melville, Andreas Thomas**
**204 North, 86th Street**
**Wauwatosa Wisconsin (US)**

(74) Representative: **Fisher, Bernard et al,**
**Raworth, Moss & Cook 36 Sydenham Road**
**Croydon Surrey CR0 2EF (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Hot gas measuring device

This invention relates to the measurement of gas characteristics through the use of a gas measuring device or probe comprising a solid electrolyte which is in contact on one side or face with a reference gas such as the ambient atmosphere and is in contact on the opposing side or face with a hot gas whose characteristics are to be measured. In such a probe, a voltage is generated between the two sides or faces of the solid electrolyte, the magnitude of the voltage being dependent upon the temperature of the electrolyte and on the ratio of the oxygen partial pressure on opposing sides or faces of the electrolyte. This principle has been used in the past to measure the oxygen partial pressure of hot furnace gases with various different oxygen sensors, such as disclosed in U.S.—A—3,454.486; US—A—3,546,086 and US—A—3,397,345 and British patent GB—A—1,296,995.

Although the principle of operation of the above-noted type of oxygen sensors is quite simple, the utilization of such oxygen sensors in industrial applications has been limited in the past due to several practical problems. First, the solid electrolyte, which is a ceramic material, is hard and brittle and is thus very susceptible to thermal shock and/or mechanical damage. Another problem has been the detachment of the electrode from the surface of the electrolyte due to corrosion of the electrodes. The latter problem occurs even when the electrodes are made of a noble metal, such as platinum. For example, platinum reacts at high temperatures and low oxygen pressures with stabilized zirconia electrolyte material, which is commonly used in this type of oxygen sensor to form $ZrPt_3$. The reaction product is in the form of fragments or dust which drops away from the electrode, thus reducing the thickness thereof and eventually breaking the electrical contact between the electrode and the electrolyte or loosening the electrode sufficiently in its mounting to allow it to be blown away by the gas stream under measurement. The life of prior art electrodes is substantially reduced when used in a highly corrosive atmosphere typically present in some heat treating furnaces. For the above reasons, the useful working life of the above-noted type of oxygen sensor has been limited in the past and has limited their potential range of application.

The use of an electronic ceramic coating is disclosed in US—E—28,792. This patent discloses (Col. 6, lines 19—66) an electrode for a fuel cell using an electronic conducting porous metal oxide coating. However, the type of electrode disclosed in patent US—E—28,792 requires that the electrodes 12 and 14 which are applied directly to the electrolyte be porous so that gas can readily diffuse through the electrodes to the electrolyte interface 10 (US—E—28,792, Col. 3, lines 48—68; Col. 4, lines 1—8). This arrangement requires a somewhat critical and low contact resistance (Col. 6, lines 19—20) for effective operation. Inasmuch as the present invention is an open circuit sensor, the contact resistance is not as critical for good operation. It is difficult to obtain uniform porosity with coatings. If the coating is too thick and does not have sufficient porosity, electrode polarization can occur which will affect output of the cell. If the coating is too thin, the resistance may be too high for proper operation. The disadvantage and critical requirements of electronic conducting coatings applied directly to the electrolyte are discussed in the article "Cathode Materials and Performance in High-Temperature Zirconia Electrolyte Fuel Cells" in the Journal of the Electrochemical Society, Vol. 116, pages 1170—1175 (1969). Use of a disc or other element formed from electronic conducting ceramic as an electrode in accordance with the invention eliminates the need for porosity in a coating applied to an electrolyte as taught in the prior art. The mechanical clearance between the electronic conducting ceramic electrode and the electrolyte enables accessibility of the furnace gases.

According to the present invention, there is provided a gas measuring device for measuring a characteristic of hot corrosive gases comprising a support tube having an end wall and a side wall and a window in the side wall having a window edge adjacent said end wall and having a solid electrolyte, the electrolyte having a first surface and a second surface, means for mounting said electrolyte within said support tube and spaced from said end wall with a portion of its first surface exposed through said window to the hot corrosive gas which is to be measured, said device having first and second electrodes with said first electrode being in contact with said first electrolyte surface and said second electrode being in contact with said second surface of the electrolyte, and means pressing said first electrode and electrolyte together, a first electrical lead for said first electrode and said device being characterised by an internal recess in said support tube end wall and said first electrode and a portion of said first lead being located in said recess, and refractory cement sealing said first electrode and said lead portion in said recess to isolate said first lead portion of said first electrode from the hot furnace gases to prevent corrosion thereof.

The problem of electrode corrosion is solved in one embodiment of the invention by forming the outer electrode which is exposed to the hot furnace gases from a noble metal mesh screen, with the screen folded over upon itself to form multiple layers. This arrangement increases the overall thickness of the electrode so that as the wires disintegrate and flake off, there will be ample reserve electrode wire remaining to function as a conductor. Even though there are several layers, the mesh form of the wires provides for flow of gas through the electrode. The undulating configuration of the wires in the mesh provides many points of contact between one mesh and the next, and with the electrolyte. The electrolyte is spring loaded to continually press one mesh screen against the other, and with the electrolyte, thus to take up any void space as the electrode wire disintegrates and fragments thereof drop off or are blown off. A modified embodiment of the mesh screen electrode includes a mesh screen with wing portions folded in overlapping relation upon a central web portion. Thus two overlapping layers of screen protect the lead wire connections to the mesh.

In another embodiment of the invention, the electrode comprises a chemically stable electronic ceramic conductor in the form of a disc which is relatively inert with respect to known hot furnace gases and known solid electrolytes and to the electric lead wires coupled thereto. The use of a disc or other suitably shaped or formed disc rather than a porous electronic conducting coating applied directly to the electrolyte eliminates the various problems with electronic conducting coatings as noted above. A further modified embodiment of the invention comprises a mesh screen or metallic conductor coated with a non-porous or impervious electronic conducting ceramic coating. The protective coating prevents the deterioration of the metallic parts of the electrode and lead wire where hot corrosive gases are present. The coating should be sufficiently thick or be applied in a manner to eliminate open porosity to prevent corrosion to the metallic parts and lead wire.

The above-mentioned electrode embodiments substantially extend the working life of the electrode and enable the oxygen sensor to be applied to industrial applications which were heretofore impractical because of the relatively short working life of prior art electrodes.

Other objects, features and advantages of the invention will appear from the disclosure hereof.

Figs. 1 to 4 illustrate a probe and a modification thereof as described in U.S.—A—4,101,404 dated July 18, 1978.

Fig. 1 is a side view of a probe mounted to extend within a furnace, various portions of the probe being partially cut away and shown in longitudinal section to reveal inner details,

Fig 2 is a cross sectional view taken on the line 2—2 of Fig. 1,

Fig. 3 is a fragmentary enlarged longitudinal sectional view of a modification of the probe of Fig. 1 in which the electrode comprises an electronic ceramic disc,

Fig. 4 is a fragmentary perspective view of end of the probe of Fig. 3,

Fig. 5 is a fragmentary perspective view of the support tube of the probe shown in Fig. 4, modified in accordance with an embodiment of the invention, the remainder of the probe being as shown in Fig. 1,

Fig. 6 is an enlarged sectional view along line 6—6 of Fig. 5,

Fig. 7 is a perspective view of a modified mesh electrode in an unfolded condition for use in the probe of Fig. 5,

Fig. 8 is a sectional view along line 8—8 of Fig. 7,

Fig. 9 is a perspective view of the folded mesh electrode shown in Fig. 7, and

Fig. 10 is a view similar to Fig. 9 with the electrode coated with an electronic conducting cement.

Although the disclosure hereof is detailed and exact to enable those skilled in the art to practice the invention, the physical embodiments herein disclosed merely exemplify the invention which may be embodied in other specific structure. The scope of the invention is defined in the claims appended hereto.

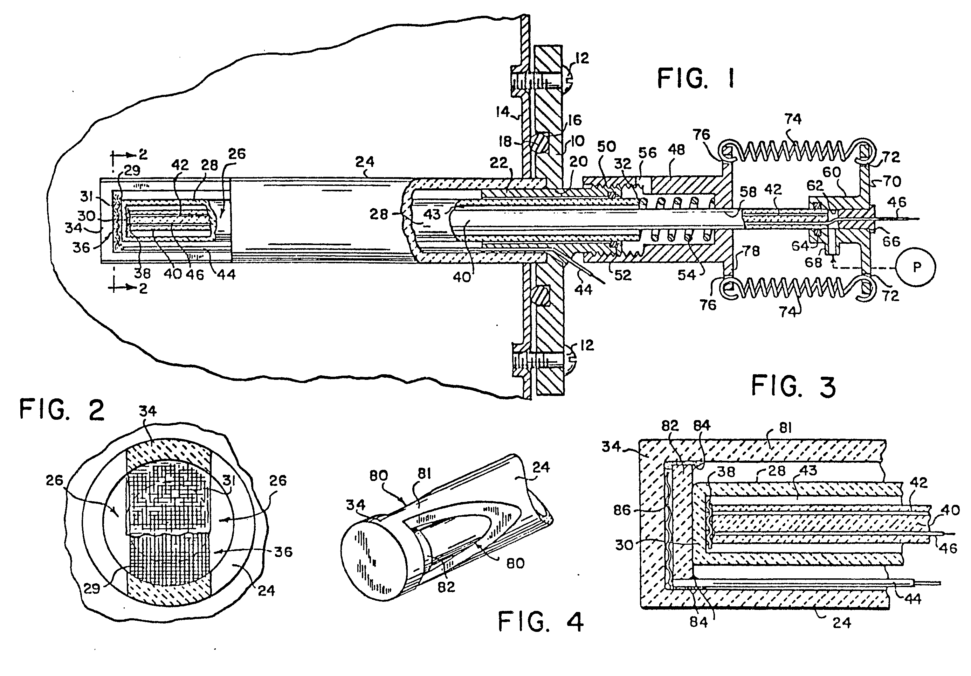

Referring to Fig. 1, the mounting structure for this probe includes a circular metal flange 10 which has holes formed in the periphery thereof to receive bolts 12 for fastening flange 10 to a port 14 on the side wall of a furnace. A circular groove 16 is formed in the inner surface of flange 10 for receiving an O-ring 18 which acts as a gas seal. Welded in the center of flange 10 is a metal sleeve 22 which supports a ceramic support tube 24 that extends into the interior of the furnace. Support tube 24 has cut away portions which form open ports or windows 26 on opposing sides of tube 24 near its end. A smaller tube 28 which is made of a solid electrolyte material and has a closed end 30 adjacent ports 26 of the tube 24 inside the furnace and an open end 32 outside the furnace is slideably mounted within metal sleeve 22 and extends through support tube 24 and terminates near the bottom end 34 thereof.

Electrolyte tube 28 is preferably made of calcia stabilized zirconia although other electrolytes could be used such as $Y_2O_3$ stabilized zirconia, calcia-doped thoria, etc. However, the calcia-stabilized zirconia is preferable because it is believed to possess better thermal shock characteristics than the other common solid electrolyte materials. The ceramic material used for support tube 24 is preferably alumina, which has good thermal shock characteristics and also has a coefficient of thermal expansion which closely matches that of the calcia-stabilized zirconia.

A first electrode 36 is mounted between the outer face of the inner end 30 of electrolyte tube 28 and the inner face of the end wall 34 of support tube 24. A second electrode 38 is mounted on the opposite side of the end wall 30 of electrolyte tube 28 between the inner face of said end wall 30 and the end of a ceramic rod 40 mounted with electrolyte tube 28. Ceramic rod 40 is preferably made of alumina and has one or more longitudinal bores 42 through which a reference gas such as the ambient atmosphere is admitted to the interior face of electrolyte end wall 30 while the exterior face thereof is in contact with the hot furnace gases admitted through ports or windows 26. The reference gas is fed to bore 42 through side ports 68 (Fig. 1) and is exhausted through the space 43 about the tube 28 and through its open end 32. As noted above, when the interior surface of electrolyte tube 28 is exposed to a reference gas and the exterior thereof is exposed to the hot gases which are to be measured, a voltage is generated between the exterior and interior surfaces of the electrolyte tube end wall 30. The magnitude of the voltage is dependent upon the temperature of the electrolyte material and the oxygen partial pressure ratio between the opposing sides of the electrolyte. Electrodes 36 and 38 serve the function of picking up this voltage difference and conducting it via suitable ceramic insulated conductors 44 and 46 to a suitable conventional measuring instrument (not shown) located at the exterior of the device.

The structure of the first electrode 36 is particularly important in this invention because it is exposed to the hot furnace gases and also is pressed against the end wall 30 of the electrolyte tube 28. Electrode 36 is subject to be corroded either by reaction with some component of the furnace gases or by reaction with the end 30 of the electrolyte tube 28. The problem of loss of electrical contact due to such corrosion is obviated by providing an electrode structure which either resists such corrosion, or which renews itself as it corrodes, thus to negate the deleterious effects of such corrosion. Such an electrode is subject to the load of an improved bias spring assembly which urges the end wall 30 of electrolyte tube 28 against the electrode 36, thus to maintain good contact therebetween in spite of such corrosion.

One type of electrode is shown in Figs. 1 and 2. It consists of two or more platinum wire screens 29, 31 which are welded or otherwise held together in face-to-face contact or assembly 36 with each other. The planes of the assembled screens 29, 31 are transverse to the axis of electrolyte tube 28. The undulations of the wires in screens 29, 31 provide good point contact of one screen with the other and with the electrolyte. By having more than one screen layer, there will be ample reserve of electrode wire which will continue to function even as the wire corrodes or disintegrates and fragments thereof flake or dust off. The spring loading on electrolyte tube 28 causes electrolyte tube 28 to advance toward electrode 36 as the contact portions of the platinum in the electrode 36 react with the zirconia in the electrolyte tube 28 to cause disintegration of the electrode and gradual reduction of electrode thickness and thus maintains good electrical contact with the platinum screen electrode assembly 36 even though corrosion does occur. The reaction product which is formed between the platinum wire electrode and the end of the electrolyte tube 28 is typically in the form of a dust which falls downwardly from the screen and exposes fresh platinum for electrical contact purposes. Mesh screens 29, 31 can be fabricated of noble metal or noble metal alloy wires other than platinum, for example, the platinum-rhodium alloy wires, gold wires and gold-palladium alloy wires referred to in GB—A—1,296,995.

Electrode 38 is also desirably a noble metal mesh screen, but it need only comprise a single layer screen rather than a multiple layer screen because the relatively high oxygen pressure in the atmosphere which contacts the electrode 38 inhibits the corrosive reaction thereof against the electrolyte tube 28 and screen 38 is not exposed to the hot gases in the furnace. Accordingly, screen 38 is not as subject to corrosion and disintegration as is electrode 36.

The compressive load is maintained between electrolyte tube 28 and electrode 36 by means of an improved spring mounting assembly which includes a hollow cylindrical cap 48 which is threaded to the outer end of sleeve 23 by screw threads 50. The hot gases which are admitted to the interior of support tube 24 are prevented from entering cap 48 by means of an O-ring seal 52 between electrolyte tube 28 and sleeve 22. A compression spring 54 is mounted interiorly within cap 48 and bears against the outer end 32 of electrolyte tube 28 and thus urges electrolyte tube 28 against electrode 36. The amount of pressure of spring 54 can conveniently be adjusted by simply turning cap 48. A viewing port 56 is formed in the central portion of cap 48. By observing the position of spring 54 through port 56 as cap 48 is being turned, the operator can perceive an approximate indication of the amount of change of spring pressure for a given amount of turning, and the compression of the spring. If desired, a more accurate scale could be marked on the cap 48 and the adjacent portion of sleeve 22.

Cap 48 has a central opening 58 in its outer end through which ceramic rod 40 slideably extends. A cap 60 is mounted by O-ring 64 on the outer end of rod 40. Cap 60 has a central bore 62 which is sealed against rod 40 on its inner end by an O-ring 64 and is plugged on its outer end by a flexible insulating plug 66 through which electrical conductor 46 extends. A gas inlet port 68 extends from the side wall of sleeve 60 and communicates into bore 62 for introducing a reference gas such as the ambient atmosphere into the interior of electrolyte tube 28 via one or more of the longitudinal bores 42 in rod 40. The reference gas which is thus introduced into the interior of electrolyte tube 28 escapes through the open end 32 thereof and the opening 56 in cap 48.

Sleeve 60 has a circular flange 70 on its outer end which has two openings 72 formed on opposing sides thereof for receiving the ends of springs 74 which are secured at their other ends to openings 76 in a flange 78 on the outer end of end cap 48. Springs 74 urge rod 40 inwardly against electrode 38, thus to maintain good contact between electrode 38 and the closed end 30 of electrolyte tube 28. It should be noted that when the end cap 48 is rotated to change the tension of spring 54, the tension is also changed on the springs 74 in the same direction, i.e. when cap 48 is turned in a direction to increase the pressure on first electrode 36, the pressure on second electrode 38 is also increased, and vice versa.

Figs. 3 and 4 show a modification in which the electrode between the electrolyte tube 28 and the end wall 34 of tube 24 comprises an electronic ceramic conductor. In this modification, open windows or ports 80 are cut transversely to the longitudinal axis of tube 24 in opposite sides of tube 24 to expose portions of the side edges of a disc-shaped electronic ceramic electrode 82. End wall 34 of tube 24 remains connected to the main body of tube 24 by bridges 81. Electrode disc 82 is cemented by refractory cement 84 into the closed end 34 of support tube 24 over the top of a wavy platinum wire 86 which is connected to the end of conductor 44, which serves to make contact with the outer face of electrode disc 82. The refractory cement 84 completely seals around the entire periphery of the electrode disc 82 so as to isolate and seal the platinum wire 86 from contact with the hot furnace gases. However, the hot furnace gases do contact the inner surface of electrode disc 82 and the outer surface of the end wall 30 of electrolyte tube 28, thus to generate a voltage difference between electrodes 38 and 82.

The electronic ceramic electrode is compounded of a suitable electronic ceramic conductor means which means the following requirements:

(a) high electronic conductivity;

(b) chemical and thermodynamic stability;

(c) it should be relatively inert to the electrolyte, the hot furnace gas and the electric lead wire 86 (typically platinum) which is coupled thereto.

Electronic ceramic conductor means meeting these requirements are discussed in detail in the scientific literature, for example, in the book entitled "electrical Conductivity in Ceramics and Glass" published by Marcel Dekker, Inc. in 1974, Parts A and B, Edited by N. M. Tallan, see particularly Chapter 6, "Highly-Conducting Ceramics and the Conductor-Insulator Transition", and the article of D. B. Meadowcroft in the British Journal of Applied Physics of 1969, Ser. 2, Vol. 2, page 1225, et seq. entitled "Some properties of strontium-doped lanthanum chromite". There are a number of electronic ceramic conductors suitable for use as electrode 82; for example, many of the rare earth perovskite oxides $RTO_3$, where R is rare earth or yttrium and T is a transition metal, are suitable. Meadowcroft has reviewed some of the properties and applications of "doped" and pure rare earth perovskites. This review is contained in Proceedings of the International Conference on Strontium containing compounds, Halifax, Nova Scotia, June 1973, edited by T. J. Gray, "Some Properties and Applications of Strontium-Doped Rare Earth Perovskites". The rare earth perovskites can be described as the series $RTO_3$ where R is a rare earth — Ce, Pr, La, Gd, etc. (and also Y) — and T is a transition metal — CO, Mn, Fe, Cr, Ni, Ti, V. Although the rare earth and transition metal must be present primarily tri-valent ions, the electronic conductivity of these compounds can be enhanced by doping with suitable aliovalent cations. Both higher or lower valent cations may be used substituting for either the rare earth or the transition metal ions.

Of the various electronic ceramic conductors which are suited for use as electrode 82, we prefer cation-doped lanthanum chromite compounded by the formula $La_{1-x}M_xCRO_3$ where M can be any cation having a valence of +2 such as calcium, strontium, magnesium, or the like. The operative range of values for x is between 0 and 0.25. The above-noted compound solves the problem of electrode corrosion because it is substantially inert to known furnace gases, known solid electrolytes and the noble metal contact wire 86, it has good electrical conductivity and is chemically and thermodynamically stable.

Within the operative range of values of x given above, the preferred range is between 0.15 and 0.25.

The electrode 82 disclosed in Figs. 3 and 4 is in the form of a disc molded or formed from the electronic ceramic conductor. Slight mechanical clearance between the abutting surfaces of electrode 82 and end 30 of the electrolyte tube enables the gas to be measured to move between these surfaces.

Referring again to Fig. 1, the reference gas is pumped by a conventional pump P into port 68 and flows down the bores 42 in rod 40 to the inner end 30 of electrolyte tube 28 and then flows back in the space between the inner surface of tube 28 and the outer surface of rod 40 and is discharged into the atmosphere through opening 56 in cap 48. This is an important feature of the invention because in some instances small cracks will form in electrolyte tube 28 and will admit the furnace gases to the interior of tube 28. Such leaked gases mix with and contaminate the reference gas and produce inaccurate output signals. However, with the above-described routing of the reference gas stream, the leaked gases are flushed by the reference gas stream away from the end 30 of electrolyte tube 28 where the potential difference is measured. Therefore, the reference gas adjacent to end 30 of electrolyte tube 28 is uncontaminated and produces accurate output signals even when there is leakage of gas through other portions of tube 28.

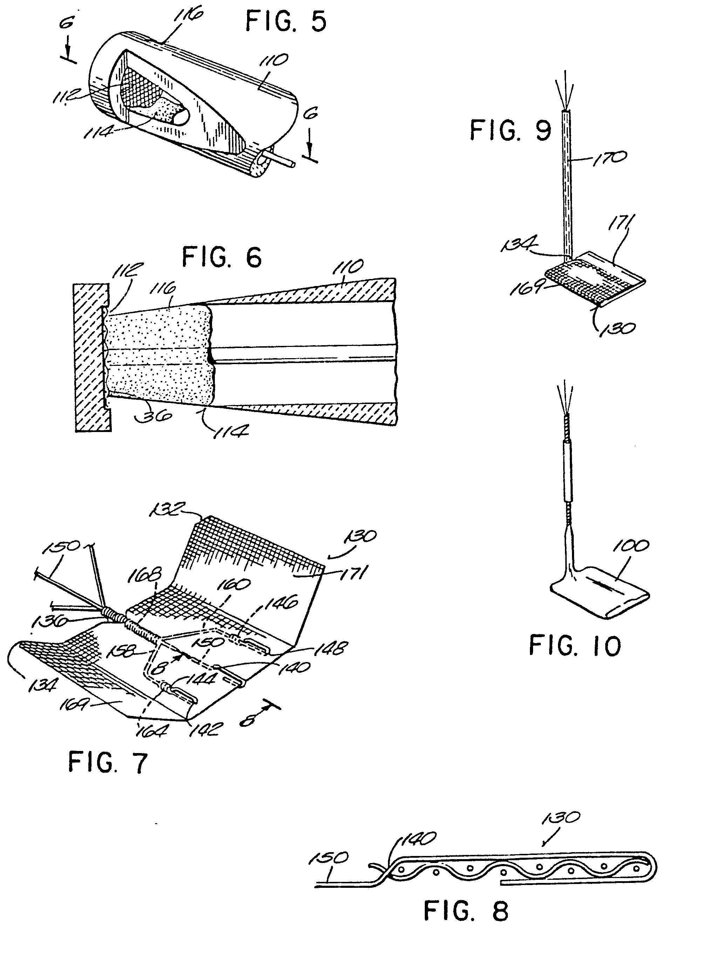

In another type of electrode, illustrated in Fig. 10, the platinum screen electrode and platinum wire are coated with a protective coating 100 of an electronic conducting ceramic. The protective coating prevents the deterioration of the electrode by isolating the platinum electrode and lead wire from the hot corrosive gases. In this case the protective coating of an electronic conducting ceramic acts as the electrode and also makes electrical contact with the platinum screen and lead wire. With this arrangement no correction has to be made for thermal emfs since both electrodes are at the same temperature and the lead wires are made of the same material.

The protective coating may be prepared by mixing the powder of the electronic conducting ceramic with a commercially available alumina cement such as AREMCO ULTRA BOND™ 552, coating the platinum screen and platinum wire, air drying and then firing at an elevated temperature in air (e.g., 1100°C. for approximately 2 hours).

We have found that the preferred mixture is 50—75% by volume of the electronic ceramic material (e.g., $La_{.84}Sr_{0.16}CrO_3$) and 50—25% by volume of the commercially available alumina cement.

The detailed description given above relates to gas measuring devices according to U.S.—A—4,101,404. The present invention relates to improvements in gas measuring devices of this general type and embodiments of these improvement will be described, by way of example, with reference to Figs. 5 to 10.

Figs. 5 and 6 show a support tube of a device according to the invention. The support tube 110 includes an internal recess 112 which is open to the windows 114, 116 and which assists in positively positioning and retaining a mesh electrode 36 in the support tube and also facilitates assembly of an electrode 36. The screen is cemented in the recess 112 by a ceramic cement. The ceramic cement is desirably the same material as the support tube 24 so that no stresses occur due to different coefficients of expansion. The rest of the device of Figs. 5 and 6 is the same as that of Fig. 1. Figs. 7, 8 and 9 disclose a modification of the device of Fig. 5. In this modification the electrode is formed from a sheet of platinum wire mesh which desirably has notches 132, 134 and 136. Holes are formed in the screen at 140, 142, 144, 146 and 148. A main lead wire 150 is extended through hole 140, looped around the end of the screen and folded over upon the screen.

Good electrical connection of the lead 150 with the mesh screen is afforded by the use of lead wires 158 and 160. The wire 158 is looped through the holes 142, 144 in the web portion of the screen 130 and the end of the wire is warapped around itself at 164. The wire 158 is wrapped around the lead wire 150 at 168. The wire 160 is similarly extended through openings 146 and 148 and wrapped around the wire 150. The wires 158, 160 are wrapped a distance up the lead wire as illustrated in Fig. 7 to make a good electrical contact therewith. The wings 169, 171 of the mesh are then folded over as illustrated in Fig. 9, with wing 169 overlapping the wing 171. A tubular ceramic sheath 170 can then be arranged around the lead wire for protection thereof. The embodiment illustrated in Fig. 10 can be the electrode shown in Fig. 9 with a coating of electronic conducting ceramic as previously described. Alternatively, the electrode can comprise a metallic conductor coated with the electronic conducting ceramic. More specifically, the metallic conductor could be a single screen or coil, etc.

The notches 132, 134, 136 enable the lead wire 150 to be recessed within the outline of the mesh screen. The notch helps support the lead wire and the screen zone around the notch provides a good base for the ceramic illustrated in Fig. 10 with rigidifies the lead wire-screen assembly.

The use of a solid electronic ceramic disc or a mesh electrode coated with electronic ceramic cement is preferred where there is a highly corrosive atmosphere such as that found in heat treating furnaces where there are chlorine or sulfur gases produced by cutting oils, cleaning fluid such as trichloroethylene or alkaline cleaners, etc. that accompany the parts that are processed in the furnace.

## Claims

1. A gas measuring device for measuring a characteristic of hot corrosive gases comprising a support tube (24, 110) having an end wall (34) and a side wall and a window (26, 80, 114, 116) in the side wall having a window edge adjacent said end wall and having a solid electrolyte (28), the electrolyte having a first surface and a second surface, means (22) for mounting said electrolyte (28) within said support tube (24, 110) and spaced from said end wall with a portion of its first surface exposed through said window (26, 80, 114, 116) to the hot corrosive gas which is to be measured, said device having first and second electrodes (36, 38) with said first electrode being in contact with said first electrolyte surface and said second electrode being in contact with said second surface of the electrolyte, and means (48, 54) pressing said first electrode (36) and electrolyte (28) together, a first electrical lead (44) for said first electrode (36) and said device being characterised by an internal recess (112) in said support tube end wall (34) and said first electrode and a portion of said first lead being located in said recess, and refractory cement (84) sealing said first electrode (36) and said lead portion (44) in said recess to isolate said first lead portion of said first electrode from the hot furnace gases to prevent corrosion thereof.

2. The device of claim 1 further characterised by said first electrode being a disc (82) formed from a chemically and thermodynamically stable electronic ceramic conductor which is relatively inert to the electrolyte tube (28) and hot corrosive gas being measured.

3. The device of claim 1 wherein said first electrode comprises a web portion (130) and wing portions (169, 171) of a noble metal screen and said lead wire (150) extending through and secured to said web portion, and second and third lead wires (158, 160) each having one end wrapped around said lead wire and the other ends secured to said web portion at points spaced from said lead, and said wing portions being folded over said web portion with said wing portions in overlapping relationship.

4. The device of claim 1 wherein said first electrode comprises a metallic conductor coated with a non-porous coating (100) of an electronic ceramic conductor.

5. The device of claim 3 wherein said first electrode is coated with an electronic ceramic conductor.

6. The device of claims 2 or 4 or 5 in which said electronic ceramic conductor comprises cation-doped lanthanum chromite.

7. The device of claims 2 or 4 or 5 in which said electronic ceramic conductor is compounded by the formula $La_{1-x}M_xCrO_3$ where M can be any cation having a valence of +2 and x is between 0 and 0.25.

8. The device of claim 7 wherein the cation M is strontium.

9. The device of claim 7 wherein the cation M is calcium.

10. The device of claim 7 wherein the value of x is between 0.15 and 0.25.

## Patentansprüche

1. Gasmeßgerät zum Messen einer charakteristischen Eigenschaft heißer korrosiver Gase mit einem Halterungsrohr (24, 119) mit einer Endwand (34) und einer Seitenwand und einem Fenster (26, 80, 114, 116) in der Seitenwand mit einer Fensterkante benachbart zu der Endwand und mit einem festen Elektrolyten (28), der eine erste und eine zweite Oberfläche aufweist, mit Einrichtungen (22) zum Befestigen des Elektrolyten (28) innerhalb des Halterungsrohres (24, 110) und beabstandet von der Endwand, wobei ein Abschnitt seiner ersten Oberfläche durch das Fenster (26, 80, 114, 116) dem heißen zu messenden korrosiven Gas ausgesetzt ist, wobei das Gerät erste und zweite Elektroden (36, 38) aufweist, von denen die erste Elektrode in Kontakt mit der ersten Elektrolyt-Oberfläche und die zweite Elektrode in Kontakt mit der zweiten Oberfläche des Elektrolyten ist, sowie mit Einrichtungen (48, 54), die die erste Elektrode (36) und den Elektrolyten (28) zusammenpressen, und mit einer ersten elektrischen Leitung (44) für die erste Elektrode (36), dadurch gekennzeichnet, daß in der Halterungsrohr-Endwand (34) eine innere Ausnehmung (112) angeordnet ist und die erste Elektrode und ein Abschnitt der ersten Leitung in der Ausnehmung angeordnet sind und feuerfester Zement (84) die erste Elektrode (36) und den Leitungsabschnitt (44) in der Ausnehmung abdichten, um den ersten Leitungsabschnitt der ersten Elektrode von den heißen Ofengasen zur Verhinderung ihrer Korrosion zu isolieren.

2. Gerät nach Anspruch 1, weiterhin dadurch gekennzeichnet, daß die erste Elektrode eine Scheibe (82) ist, die aus einem chemisch und thermodynamisch stabilen elektronischen keramischen Leiter gebildet ist, der relativ unempfindlich gegenüber dem elektrolytischen Rohr (28) und dem heißen, zu messenden korrosiven Gas ist.

3. Gerät nach Anspruch 1, worin die erste Elektrode einen Kernabschnitt (130) und Flügelabschnitte (169, 171) aus einem Edelmetallschirm aufweist und sich der Leitungsdraht (150) durch dem Kernabschnitt erstreckt und an diesem befestigt ist, und zweite und dritte Leitungsdrähte (158, 160) mit jeweils einem Ende um diesen Leitungsdraht gewunden sind und ihre anderen Enden an dem Kernabschnitt an Punkten befestigt sind, die von der Leitung entfernt sind, und die Flügelabschnitte über den Kernabschnitt gefaltet sind, wobei sich die Flügelabschnitte überlappen.

4. Gerät nach Anspruch 1, worin die erste Elektrode einen metallischen Leiter aufweist, der mit einer nicht porösen Beschichtung (100) eines elektronischen keramischen Leiters beschichtet ist.

5. Gerät nach Anspruch 3, worin die erste Elektrode mit einem elektronischen keramischen Leiter beschichtet ist.

6. Gerät nach Anspruch 2 oder 4 oder 5, wobei der elektronische keramische Leiter kationdotiertes Lanthanchromit aufweist.

7. Gerät nach Anspruch 2 oder 4 oder 5, wobei der elektronische keramische Leiter nach der Formel $La_{1-x}M_xCrO_3$ zusammengesetzt ist, wobei M irgendein Kation mit einer Valenz von +2 ist und x zwischen 0 und 0,25 liegt.

8. Gerät nach Anspruch 7, worin das Kation M Strontium ist.

9. Gerät nach Anspruch 7, worin das Kation M Kalzium ist.

10. Gerät nach Anspruch 7, worin der Wert von x zwischen 0,15 und 0,25 liegt.

## Revendications

1. Sonde de mesure pour gas, pour mesurer une caractéristique des gaz chauds corrosifs, qui comprend: un tube support (24, 110) comportant une paroi d'extrémité (34) et une paroi latérale, et une fenêtre (26, 80, 114, 116) ménagée dans la paroi latérale, comportant un rebord de fenêtre adjacent à ladite paroi d'extrémité, et qui comprend un électrolyte solide (28), lequel électrolyte possède une première surface et une seconde surface, des moyens (22) pour monter ledit électrolyte (28) dans ledit tube support (24, 110), de façon espacée par rapport à ladite paroi d'extrémité, une portion de sa première surface étant exposée, au travers de ladite fenêtre (26, 80, 114, 116) au gaz corrosif chaud devant être mesuré, ledit dispositif comportant des première et seconde électrodes (36, 38), ladite première électrode étant au contact de la première surface de l'électrolyte, et ladite second électrode étant au contact de la seconde surface de l'électrolyte, des moyens (48, 54) appliquant la première électrode (36) contre l'électrolyte (28), et un premier conducteur électrique (44) pour la première électrode (36), cette sonde étant caractérisée en ce qu'elle comporte un évidement interne (112) dans la paroi d'extrémité (34) dudit tube support, en ce que ladite première électrode et une portion dudit premier conducteur sont logées dans ledit évidement, et en ce qu'un ciment réfractaire (84) scelle ladite première électrode (36) et ladite portion de conducteur (44) dans ledit évidement, afin d'isoler des gaz chauds du four ladite portion du premier conducteur de ladite première électrode, pour en empêcher la corrosion.

2. Sonde selon la revendication 1, caractérisée en ce que la première électrode est constituée d'un disque (82) formé à partir d'un conducteur céramique électronique chimiquement et thermodynamiquement stable qui est relativement inerte vis à vis du tube électrolytique (28) et du gaz corrosif chaud en cours de mesure.

3. Sonde selon la revendication 1, caractérisée en ce que ladite première électrode comprend une partie (130) en forme de bande et des parties (169, 171) en forme d'ailes, constituées d'un treillis d'un métal noble, en ce que ledit conducteur (150) s'étend au travers de la partie en forme de bande à laquelle il est fixé, en ce que les second et troisième conducteurs comportent chacun une extrémité qui s'enroule autour dudit conducteur, les autres extrémités étant fixées à ladite partie en forme de bande en des points espacés dudit conducteur, et en ce que les parties en forme d'ailes sont repliées sur ladite partie en forme de bande de manière que lesdites ailes se recouvrent.

4. Sonde selon la revendication 1, caractérisée en ce que ladite première électrode comprend un conducteur métallique recouvert d'un revêtement non poreux (100), constitué d'un conducteur céramique électronique.

5. Sonde selon la revendication 3, caractérisée en ce que ladite première électrode est revêtue d'un conducteur céramique électronique.

6. Sonde selon l'une des revendications 2, 4 ou 5, caractérisée en ce que ledit conducteur céramique électronique est constitué de chromite de lanthane dopée par des cations.

7. Sonde selon l'une des revendications 2, 4 ou 5, caractérisée en ce que ledit conducteur céramique électronique est un composé de la formule $La_{1-x}M_xCrO_3$, dans laquelle M peut être tout cation présentant une valence de +2, et x est compris entre 0 et 0,25.

8. Sonde selon la revendication 7, caractérisée en ce que le cation M est du strontium.

9. Sonde selon la revendication 7, caractérisée en ce que la cation M est du calcium.

10. Sonde selon la revendication 7, caractérisée en ce que la valeur de x est comprise entre 0,15 et 0,25.

FIG. 1

FIG. 2

FIG. 4

FIG. 3

0 006 989

FIG. 5

FIG. 6

FIG. 9

FIG. 7

FIG. 10

FIG. 8